# EUROPÄISCHE PATENTANMELDUNG

(11) **EP 4 786 388 A1**
(43) Veröffentlichungstag der Anmeldung: **05.08.2026**
(21) Anmeldenummer: 25225934.6
(22) Anmeldetag: 19.12.2025
(51) Int. Cl.: B65H 19/18, H01M 10/04

(54) **VORRICHTUNG UND VERFAHREN ZUR VERBINDUNG ZWEIER MATERIALBAHNEN BEI EINEM COILWECHSEL, ANLAGE ZUR GROSSSERIENHERSTELLUNG VON ENERGIEZELLEN SOWIE VERWENDUNG DER VORRICHTUNG ZUR GROSSSERIENHERSTELLUNG VON ENERGIEZELLEN**

(30) Priorität: 23.09.2025 EP 25204091
(71) Anmelder: Grob-Werke GmbH & Co. KG, 87719 Mindelheim (DE)
(72) Erfinder: Janusch, Tim, 87746 Erkheim (DE); Benischke, Stephan, 87727 Babenhausen (DE)
(74) Vertreter: KASTEL Patentanwälte PartG mbB

(57) **Zusammenfassung**

Die Erfindung betrifft eine Vorrichtung (100) zur Verbindung zweier Materialbahnen (22.1, 22.2), beispielsweise zweier Separatorbahnen einer Energiezelle, bei einem Coilwechsel, umfassend: eine erste Coilaufnahme (101.1) zur Aufnahme eines ersten Coils (37.1) einer ersten Materialbahn (22.1), eine zweite Coilaufnahme (101.2) zur Aufnahme eines zweiten Coils (37.2) einer zweiten Materialbahn (22.2), eine Spliceeinrichtung (102) zur Verbindung der ersten Materialbahn (22.1) des ersten Coils (37.1) mit der zweiten Materialbahn (22.2.) des zweiten Coils (37.2), wobei die Spliceeinrichtung (102) Mittel zum Aufheizen (104) der ersten und zweiten Materialbahn (22.1, 22.2) aufweist, um die erste und zweite Materialbahn (22.1, 22.2) miteinander zu verschweißen. Ferner betrifft die Erfindung auch eine Anlage (10) zur Großserienherstellung von Energiezellen, mit einer erfindungsgemäßen Vorrichtung (100) und ein Verfahren (200) zur Verbindung zweier Materialbahnen (22.1, 22.2), beispielsweise zweier Separatorbahnen einer Energiezelle bei einem Coilwechsel.

## Beschreibung

Die Erfindung betrifft eine Vorrichtung zur Verbindung zweier Materialbahnen, beispielsweise zweier Separatorbahnen für eine Energiezelle, bei einem Coilwechsel, eine Anlage zur Großserienherstellung von Energiezellen, die Verwendung der Vorrichtung zur Großserienherstellung von Energiezellen sowie ein Verfahren zur Verbindung zweier Materialbahnen, beispielsweise zweier Separatorbahnen für eine Energiezelle bei einem Coilwechsel.

Die Erfindung befindet sich auf dem Gebiet der Coilabwicklung, insbesondere bei dem sogenannten Splicen (auch: Spleißen), bei dem zwei Materialbahnen miteinander verbunden werden. Dies wird beispielsweise bei einem Coilwechsel durchgeführt, um die Materialbahn eines auslaufenden Coils mit einer Materialbahn eines neuen Coils zu verbinden, um eine kontinuierliche, quasi endlose, Materialbahn zu erzeugen. Dadurch können an das Splicen anschließende Prozesse kontinuierlich durchgeführt werden. Die zwei Materialbahnen weisen typischerweise die gleiche Zusammensetzung auf.

Die Druckschrift DE 10 2023 111 022 A1 beschreibt eine Vorrichtung für die Energiezellen produzierende Industrie zum Bilden eines Stapels, der eine Vielzahl von Segmenten und eine Materialbahn umfasst. Die Vorrichtung ist dazu eingerichtet, die Materialbahn zickzackförmig zu falten und die Segmente derart auf der Materialbahn abzulegen, dass bei dem Stapel die Segmente in den Falten der Materialbahn angeordnet sind.

Die in der Druckschrift DE 10 2023 111 022 A1 beschriebene Vorrichtung umfasst eine Coilaufnahme für einen auslaufenden Coil und eine Coilaufnahme für einen neuen Coil, und eine Spliceeinrichtung, mit der ein freies Ende eines auslaufenden Coils mit einem freien Ende eines neuen Coils verbindbar ist. Die Spliceeinrichtung umfasst eine Verbindungseinrichtung mit wenigstens einem Klebemittelapplikator, der zum Verkleben einer auslaufenden Separatorbahn mit einer neuen Separatorbahn eingerichtet ist. Die alte Separatorbahn und die neue Separatorbahn werden mit einem Klebeband verbunden und die alte Separatorbahn wird im Anschluss mit einer Schneideinheit durchtrennt.

Ein Nachteil der Verwendung eines Klebebands, das sogenannte Splice-Tape, ist, dass dieses ein zusätzliches Medium darstellt, welches in regelmäßigen Abständen gewechselt werden muss. Zudem ist der Prozess des Klebeband-Applizierens fehleranfällig und schwer automatisierbar, weshalb dieser Vorgang oft noch zumindest teilweise händisch ausgeführt wird.

Die Erfindung hat sich zur Aufgabe gestellt, die Automatisierung des Splicevorgangs für Materialbahnen zu verbessern.

Zum Lösen dieser Aufgabe schafft die Erfindung eine Vorrichtung gemäß Anspruch 1, eine Anlage gemäß Anspruch 8 sowie ein Verfahren gemäß Anspruch 9.

Vorteilhafte Ausgestaltungen sind Gegenstand der Unteransprüche. Die einzeln genannten Merkmale sind in technologisch sinnvoller Weise miteinander kombinierbar und können durch erläuternde Sachverhalte aus der Beschreibung und/oder den Figuren ergänzt werden.

Die Erfindung schafft gemäß einem ersten Aspekt eine Vorrichtung zur Verbindung zweier Materialbahnen, beispielsweise zweier Separatorbahnen für eine Energiezelle, bei einem Coilwechsel. Die Vorrichtung umfasst eine erste Coilaufnahme zur Aufnahme eines ersten Coils einer ersten, auslaufenden Materialbahn, eine zweite Coilaufnahme zur Aufnahme eines zweiten Coils einer zweiten, neuen Materialbahn und eine Spliceeinrichtung zur Verbindung der ersten Materialbahn des ersten Coils mit der zweiten Materialbahn des zweiten Coils. Die Spliceeinrichtung weist Mittel zum Aufheizen der ersten Materialbahn und der zweiten Materialbahn auf, um die Materialbahn und die zweite Materialbahn miteinander zu verschweißen.

Als "Coil" werden Rollen bezeichnet, auf denen eine Materialbahn aufgewickelt ist und von denen diese Materialbahn abgewickelt werden kann. Unter dem Begriff "Splicen" (auch: Spleißen) wird das Verbinden zweier Materialbahnen verstanden, derart, die zwei miteinander verbundenen, d.h. gesplicten, Materialbahnen wie eine kontinuierliche Materialbahn erscheinen und verarbeitet werden können. Das bedeutet, dass beim Splicen die Verbindung der zwei Materialbahnen insbesondere so ausgeführt wird, dass nach dem Splicevorgang im Wesentlichen keine losen Materialbereiche im Bereich einer Verbindungsstelle (auch: Splicestelle) vorhanden sind.

Die Vorrichtung kann insbesondere bei dem so genannten Splicen, bei dem zwei Materialbahnen miteinander verbunden werden, verwendet werden. Dies wird beispielsweise bei einem Coilwechsel durchgeführt, um die Materialbahn eines auslaufenden Coils mit einer Materialbahn eines neuen Coils zu verbinden, um eine kontinuierliche, quasi endlose, Materialbahn zu erzeugen. Die zwei Materialbahnen weisen typischerweise die gleiche Zusammensetzung auf.

Gemäß der Erfindung sind die erste Materialbahn und die zweite Materialbahn miteinander über eine Schweißverbindung, beispielsweise eine längliche Schweißnaht, stoffschlüssig verbunden. Da die Vorrichtung die erste Materialbahn und die zweite Materialbahn durch Schweißen miteinander verbindet, wird kein zusätzlicher Klebstoff, beispielsweise in Gestalt eines Klebebands, auf einer der Materialbahnen aufgebracht, um die Materialbahnen miteinander zu verbinden bzw. zu splicen. Folglich sind die Vorrichtung zum Verbinden zweier Materialbahnen und der Splicevorgang vereinfacht, und gleichzeitig wird eine zuverlässige Verbindung bereitgestellt. Insbesondere wird ein vereinfachter Verbindungsvorgang, nämlich ein Verschweißen der zu verbindenden Materialbahnen, bereitgestellt, mit dem die Automatisierung des Splicevorgangs für Materialbahnen verbessert, insbesondere erhöht, wird.

Durch den Splicevorgang mittels des Verschweißens der beiden Materialbahnen ist es möglich, auf die Verwendung eines Splice-Tapes, d.h., Klebeband zu verzichten. Dadurch ist es möglich, die erforderlichen Arbeitsvorgänge für das Splicen der Materialbahnen zu reduzieren, indem z.B. auf einen Wechselvorgang für das Splice-Tape, d.h. Klebeband, und/oder das Applizieren des Splice-Tapes verzichtet werden kann. Dadurch lässt sich das Splicen erheblich leichter und/oder zu einem größeren Anteil automatisieren.

Die Vorrichtung kann bei der Energiezellenherstellung, beispielsweise bei der Batterieherstellung, verwendet werden. Insbesondere kann die erfindungsgemäße Vorrichtung für das Splicen der Separatorbahn des Separators für eine Energiezelle verwendet werden. Durch das Splicen werden zwei Separatorbahnen, insbesondere stoffschlüssig, miteinander verbunden, um eine kontinuierliche, quasi endlose, Separatorbahn zu erzeugen.

Die Mittel zum Aufheizen der ersten und zweiten Materialbahn werden so gesteuert, dass eine Schweißverbindung, wie bspw. eine Schweißnaht, zwischen dem Material der ersten und zweiten Materialbahn hergestellt wird. Insbesondere wird zumindest ein Mittel zum Aufheizen erwärmt, die Mittel zum Aufheizen werden mit den sich teilweise überlappend angeordneten Separatorbahnen in Kontakt gebracht, wobei sich auch die beiden miteinander zu verbindenden Separatorbahnen zumindest abschnittsweise berühren. Durch den Kontakt der Mittel zum Aufheizen mit den Separatorbahnen wird ein Material der Separatorbahnen in einem Kontaktbereich mit den Mitteln zum Aufheizen zumindest teilweise geschmolzen, wodurch eine stoffschlüssige Verbindung der beiden Separatorbahnen in dem Kontaktbereich erzeugt wird. Anschließend kühlt das Material in dem Kontaktbereich wieder ab (z.B. indem die Mittel zum Aufheizen von diesem Bereich weg bewegt werden), wodurch das Material in dem Kontaktbereich erstarrt und somit die beiden Materialbahnen in dem Kontaktbereich stoffschlüssig miteinander verbunden sind. Daher kann dieser Kontaktbereich auch als Materialbahnverbindungsstelle bezeichnet werden.

Mit anderen Worten kann man sagen, dass die erzeugte Schweißverbindung durch ein (lokales) Schmelzen des Materials und anschließendem Erstarren des Materials der ersten und zweiten Materialbahn ausgebildet wird. Gemäß einer beispielhaften Ausführungsform sind die Mittel zum Aufheizen der ersten und zweiten Materialbahn als Siegelleisten ausgebildet, wobei zumindest eine der Siegelleisten beheizbar ist. Die Siegelleisten sind auf gegenüberliegenden Seiten der überlappend angeordneten Materialbahnen einander gegenüberliegend angeordnet, so dass zum Verschweißen der beiden Materialbahnen eine Siegelleiste mit einer der Materialbahnen in Kontakt kommt.

Die Vorrichtung ist besonders vorteilhaft zum Verbinden von Separatorbahnen, die in der Regel als dünne Folie ausgebildet sind. Solche dünnen Folien sind häufig sehr empfindlich und damit schwierig in der Verarbeitung. Deswegen ist der Schweißvorgang durch die Mittel zum Aufheizen, beispielweise durch die Siegelleiste, genau steuerbar.

In einer beispielhaften Ausführungsform umfasst die Spliceeinrichtung ferner eine erste Übergabeeinheit für die erste Materialbahn und eine zweite Übergabeeinheit für die zweite Materialbahn. Die Übergabeeinheiten sind dazu eingerichtet, die beiden Materialbahnen miteinander in Kontakt zu bringen. Die Übergabeeinheiten sind somit auf gegenüberliegenden Seiten der Materialbahnverbindungsstelle angeordnet sind. Die erste Übergabeeinheit und die zweite Übergabeeinheit sind aufeinander zu und voneinander weg bewegbar, um die erste bzw. die zweite Materialbahn zu kontaktieren und miteinander zu verschweißen. Dabei kann die erste und/oder die zweite Übergabeeinheit bewegbar ausgeführt sein.

Die erste und die zweite Materialbahn sind zwischen der ersten und der zweiten Übergabeeinheit angeordnet, so dass die erste Materialbahn und die zweite Materialbahn durch ein aufeinander Zubewegen der ersten Übergabeeinheit und der zweiten Übergabeeinheit zumindest abschnittsweise einander kontaktieren bzw. aufeinanderliegen. Aufgrund der Bewegung der ersten und zweiten Übergabeeinheit aufeinander zu werden die erste und die zweite Materialbahn mit einer von diesen kontaktiert, aneinandergedrückt und im Bereich der Materialbahnverbindungsstelle miteinander verschweißt. Nachdem die erste und zweite Materialbahn miteinander verschweißt sind, werden die erste und die zweite Übergabeeinheit (durch die Bewegung von mindestens einer der ersten und zweiten Übergabeeinheit) auseinander bewegt, so dass die verschweißte Verbindungsstelle freiliegt.

In einer beispielhaften Ausführungsform weisen die erste Übergabeeinheit und die zweite Übergabeeinheit jeweils eine Siegelleiste auf, wobei zumindest eine der Siegelleisten beheizbar ist und die Mittel zum Aufheizen bereitstellt. Die Siegelleiste und die Mittel zum Aufheizen der Siegelleiste werden verwendet, um die erste und die zweite Materialbahn miteinander zu verschweißen.

Die Siegelleisten können eine Länge aufweisen, die mindestens der Breite der Materialbahn entspricht oder größer ist als die Breite der Materialbahn, so dass eine längliche Schweißnaht geformt wird, die sich über die gesamte Breite der überlappenden ersten und zweiten Materialbahn erstreckt.

Insbesondere sind die Siegelleisten aufeinander zu und voneinander weg bewegbar, um die erste bzw. die zweite Materialbahn zu kontaktieren und diese miteinander in Kontakt zu bringen, um sie miteinander zu verschweißen.

In einer beispielhaften Ausführungsform weisen die erste Übergabeeinheit und die zweite Übergabeeinheit jeweils ferner eine erste Vakuumplatte und eine zweite Vakuumplatte auf, zwischen denen die Siegelleiste angeordnet ist. Die erste Vakuumplatte, die zweite Vakuumplatte und die Siegelleiste der jeweiligen Übergabeeinheit bilden eine Andrückfläche, die an die erste bzw. die zweite Materialbahn andrückbar ist. In Prozessrichtung gesehen ist die zweite Vakuumplatte oberhalb, d.h. stromaufwärts, und die erste Vakuumplatte unterhalb, d.h. stromabwärts der Siegelleiste angeordnet. An der Verbindungsstelle liegen die zweite Materialbahn und die erste Materialbahn aufeinander. Die Siegelleiste und die erste und zweite Vakuumplatte können jeweils eine Länge aufweisen, die der Breite der ersten und zweiten Materialbahn zumindest entspricht oder größer als diese ist.

In einer Ausführungsform sind die erste Vakuumplatte und die zweite Vakuumplatte relativ zu der Siegelleiste bewegbar und die Siegelleiste ist relativ zu der ersten und zweiten Vakuumplatte bewegbar. Diese Anordnung ermöglicht, dass die erste und zweite Vakuumplatte zuerst und danach die Siegelleiste in Kontakt mit der ersten bzw. zweiten Materialbahn gebracht werden. Dies ermöglicht, dass die Schweißbedingungen, z.B. Temperatur, Zeit, Druck, besser kontrolliert / gesteuert werden können, damit eine Qualität der Schweißverbindung verbessert und somit eine zuverlässigere Schweißverbindung hergestellt werden kann.

In einer Ausführungsform weist die zweite Vakuumplatte einen ersten Teil und einen zweiten Teil auf, wobei der erste Teil der zweiten Vakuumplatte und die erste Vakuumplatte zusammen einen ersten Vakuumbereich bilden und der zweite Teil der zweiten Vakuumplatte einen zweiten Vakuumbereich bildet. Der erste Vakuumbereich und zweite Vakuumbereich können unabhängig voneinander und individuell mit der Vakuumquelle verbunden und/oder getrennt werden. Diese beispielhaften Ausführungsformen kann insbesondere bei dem Abwickeln des zweiten Coils verwendet werden, um die zweite, neue Materialbahn vor deren Verbindung mit der ersten, auslaufenden Materialbahn des ersten Coils in den Prozess einzuführen und entsprechend zur ersten, auslaufenden Materialbahn zu positionieren.

Die Vorrichtung kann außerdem eine oder mehrere der folgenden Merkmale aufweisen:
Gemäß einer beispielhaften Ausführungsform weisen die erste Übergabeeinheit und die zweite Übergabeeinheit jeweils eine Rückplatte auf, an der die ersten Vakuumplatte, die zweite Vakuumplatte und die Siegelleiste angeordnet sind.

Gemäß einer weiteren beispielhaften Ausführungsform sind die erste Vakuumplatte und die zweite Vakuumplatte jeweils mittels wenigstens einer Federlagerung mit der Rückplatte gekoppelt, sodass die Vakuumplatten in einem kraftfreien Zustand im Wesentlichen parallel (mit einem vorbestimmten Abstand) zur Rückplatte angeordnet sind und durch Kraftaufbringung entgegen der Federkraft mit der Rückplatte in Kontakt gebracht werden können.

Gemäß einer beispielhaften Ausführungsform ist die Siegelleiste auf der jeweiligen Rückplatte der ersten Übergabeeinheit und der zweiten Übergabeeinheit angeordnet. Insbesondere ist die Siegelleiste in einer festgelegten Position an bzw. auf der Rückplatte angeordnet. In Kombination mit den federgelagerten Vakuumplatten ist es somit möglich, dass die erste und die zweite Vakuumplatte vor der Siegelleiste mit der jeweiligen Materialbahn in Kontakt gebracht werden kann. Damit ist es möglich, zuerst die beiden Materialbahnen miteinander in Kontakt zu bringen und anschließend die Siegelleisten mit der ersten bzw. zweiten Materialbahn in Kontakt zu bringen, um die Materialbahnen unter Ausbildung der Materialbahnverbindungsstelle miteinander zu verbinden.

Gemäß einer beispielhaften Ausführungsform weisen die erste Übergabeeinheit und die zweite Übergabeeinheit jeweils die Rückplatte auf, wobei die Rückplatte der jeweiligen Übergabeeinheit jeweils mit einem Hub-Zylinder gekoppelt, der dazu eingerichtet ist, die erste und die zweite Übergabeeinheit aufeinander zu und voneinander weg zu bewegen. Mit anderen Worten kann man sagen, dass die Übergabeeinheiten über die Hub-Zylinder auf die Materialbahnverbindungsstelle zu und von dieser weg bewegt werden.

Gemäß einer beispielhaften Ausführungsform weist zumindest die zweite Übergabeeinheit eine längliche Vertiefung zur Führung einer Schneideinrichtung, bspw. eines Messers, auf. Die Vertiefung ist insbesondere zwischen dem ersten Teil und dem zweiten Teil der zweiten Vakuumplatte angeordnet und dazu eingerichtet die Schneideinrichtung zum Abtrennen eines losen Endes der zweiten, neuen Materialbahn zu führen. Das Abtrennen des losen Endes (am Beginn der zweiten, neuen Materialbahn) kann automatisiert oder händisch durch einen Werker durchgeführt werden.

Bei einem sauberen Beginn der zweiten, neuen Materialbahn, d.h. ein Beginn mit einer sauberen und insbesondere geraden Kante entlang der Materialbahnbreite und/oder eine exakten Positionierung der zweiten, neuen Materialbahn beim Einführen/Einziehen dieser Materialbahn in die Vorrichtung zum Verbinden zweiter Materialbahnen kann auf das Abtrennen des losen Endes der zweiten, neuen Materialbahn auch verzichtet werden.

Gemäß einer beispielhaften Ausführungsform umfasst die Vorrichtung Trennmittel, um die erste Materialbahn durchzutrennen.; Insbesondere weisen die Trennmittel einen beheizbaren Draht auf. Die Trennmittel sind dazu eingerichtet, die erste, alte Materialbahn unterhalb der ersten Vakuumplatte, also in Prozessrichtung gesehen stromabwärts der ersten Vakuumplatte, zu durchtrennen. Insbesondere sind die Trennmittel dazu eingerichtet, die erste Materialbahn in Prozessrichtung gesehen stromabwärts der Übergabeeinheit (also unterhalb der Übergabeeinheit) zu durchtrennen.

Gemäß einer beispielhaften Ausführungsform weist die Vorrichtung, insbesondere die Spliceeinrichtung, Mittel zum Regeln der Temperatur der beheizbaren Siegelleiste auf.

Gemäß einer beispielhaften Ausführungsform weist die Vorrichtung, insbesondere die Spliceeinrichtung, Mittel zum Regeln der Andrückdauer und/oder der Andrückkraft der Siegelleiste der ersten und zweiten Übergabeeinheit auf.

Die Erfindung schafft gemäß einem weiteren Aspekt eine Anlage zur Großserienherstellung von Energiezellen, umfassend die Vorrichtung nach einer der hierin beschriebenen Ausführungsformen. Die Energiezelle kann eine Batterie sein, die insbesondere eine Laminatgestaltung oder eine Z-Faltung-Gestaltung aufweisen kann, oder eine Brennstoffzelle, die insbesondere eine Laminatgestaltung aufweisen kann.

Die Erfindung schafft gemäß einem weiteren Aspekt ein Verfahren zur Verbindung zweier Materialbahnen, beispielsweise zweier Separatorbahnen für eine Energiezelle. Das Verfahren kann bei einem Coilwechsel verwendet werden. Das Verfahren umfasst ein Überlappen einer zweiten, neuen Materialbahn eines zweiten (neuen) Coils mit einer ersten, auslaufenden Materialbahn eines ersten (auslaufenden) Coils, und ein lokales Erhitzen der ersten und der zweiten Materialbahn, insbesondere in einem Überlappungsbereich, um die erste Materialbahn und die zweite Materialbahn miteinander zu verbinden, insbesondere zu verschweißen.

Das Verfahren kann zur Herstellung einer Energiezelle in Form einer Batterie verwendet werden, die insbesondere eine Laminatgestaltung oder eine Z-Falte-Gestaltung aufweisen kann, oder einer Brennstoffzelle, die insbesondere eine Laminatgestaltung aufweisen kann.

Die erste Materialbahn und die zweite Materialbahn werden somit über eine lokale Schweißverbindung, beispielsweise eine längliche Schweißnaht, miteinander verbunden, so dass die Verbindung frei von Klebstoff ist und aus dem geschmolzenen und wieder erstarrten Material der ersten und zweiten Materialbahnen ausgebildet ist.

In einer beispielhaften Ausführungsform umfasst das Verfahren ferner ein Anordnen der überlappenden ersten und zweiten Materialbahn zwischen einer ersten Übergabeeinheit und einer zweiten Übergabeeinheit, wobei die erste Übergabeeinheit und die zweite Übergabeeinheit jeweils eine Siegelleiste aufweisen, und wenigstens eine der Siegelleisten beheizbar ist.

Gemäß einer Ausführungsform umfasst das Verfahren ferner ein Aufheizen der beheizbaren Siegelleiste und ein In-Kontakt-Bringen der Siegelleiste der ersten Übergabeeinheit mit der ersten Materialbahn und der Siegelleiste der zweiten Übergabeeinheit mit der zweiten Materialbahn, um die erste und zweite Materialbahn miteinander zu verschweißen.

Die Temperatur der Siegelleiste sowie die Andrückzeit und die Andrückkraft, also der Druck, mit dem die Siegelleiste auf den Materialbahnen aufgebracht wird, können gesteuert werden, um die Schweißnaht herzustellen. Die Länge der Siegelleiste kann quer zu der Länge der Materialbahn, die sich in der Prozessrichtung, beispielsweise vertikal oder horizontal, erstreckt, angeordnet werden, so dass sich die Siegelleiste über die gesamte Breite der Materialbahn erstreckt und mit dieser in Kontakt steht. Somit kann eine längliche Schweißnaht über die gesamte Breite der aufeinander angeordneten Materialbahnen erzeugt werden.

In einer Ausführungsform weisen die erste Übergabeeinheit und die zweite Übergabeeinheit jeweils ferner eine erste Vakuumplatte und eine zweite Vakuumplatte auf, zwischen denen die Siegelleiste angeordnet ist. In Prozessrichtung gesehen ist die zweite Vakuumplatte oberhalb, d.h. stromaufwärts, und die erste Vakuumplatte unterhalb, d.h. stromabwärts der Siegelleiste angeordnet.

Die erste Vakuumplatte, die zweite Vakuumplatte und die Siegelleiste bilden eine Andrückfläche, wobei die erste Vakuumplatte und die zweite Vakuumplatte relativ zu der Siegelleiste bewegbar sind und die Siegelleiste relativ zu der ersten und zweiten Vakuumplatte bewegbar ist. Im Verfahren werden zunächst die erste und zweite Vakuumplatte der ersten und zweiten Übergabeeinheit in Kontakt mit der ersten Materialbahn bzw. zweiten Materialbahn gebracht. Danach werden die Siegelleisten in Kontakt mit der ersten bzw. zweiten Materialbahn gebracht, um die erste und zweite Materialbahn miteinander zu verschweißen.

In einer Ausführungsform weist die zweite Vakuumplatte einen ersten Teil und einen zweiten Teil auf, wobei der erste Teil der zweiten Vakuumplatte und die erste Vakuumplatte zusammen einen ersten Vakuumbereich bilden und der zweite Teil der zweiten Vakuumplatte einen zweiten Vakuumbereich bildet. Der erste Vakuumbereich und der zweite Vakuumbereich sind unabhängig voneinander an einer Vakuumquelle verbindbar und trennbar, so dass das Vakuum mit dem ersten und/oder zweiten Vakuumbereich wahlweise verbunden werden kann.

Zum Ersetzen des auslaufenden Coils einer ersten Materialbahn durch das neue Coil einer zweiten Materialbahn wird zunächst ein Vakuum im ersten und zweiten Vakuumbereich der zweiten Übergabeeinheit erzeugt, und die zweite Materialbahn wird mittels der ersten und zweiten Vakuumplatte der ersten Übergabeeinheit angesogen und fixiert, ein loses Ende der zweiten Materialbahn wird abgetrennt. Danach wird das Vakuum im zweiten Bereich ausgeschaltet (um das lose, abgetrennte Ende der zweiten Materialbahn "fallen zu lassen") und das Vakuum im ersten Vakuumbereich bleibt erhalten. Das Verfahren wird fortgesetzt, indem die beheizbare Siegelleiste der zweiten Übergabeeinheit auf die gewünschte Temperatur erhitzt wird, während die zweite Materialbahn die Siegelleiste nicht berührt. Danach werden die Siegelleisten in Kontakt mit der ersten und zweiten Materialbahn gebracht. In Ausführungsbeispielen, in denen die zweite Vakuumplatte nicht in zwei Bereiche unterteilt ist, wird das lose Ende der zweiten Materialbahn nach dem Durchtrennen entgegen der Vakuumwirkung, beispielweise händisch, von der Vakuumplatte gezogen.

Das Vakuum der ersten Übertragungseinheit, also der Übertragungseinheit, die mit der ersten, auslaufenden Materialbahn in Kontakt gebracht wird, ist üblicherweise deaktiviert, da die erste Materialbahn bereits in die Anlage eingezogen ist, und somit eine vorbestimmte Spannung aufweist. Mit anderen Worten kann man sagen, dass das Vakuum an den Übertragungseinheiten üblicherweise dafür gebraucht werden, die zweite, neue Materialbahn in den Prozess einzubringen. Es ist aber natürlich denkbar, auch die erste, auslaufende Materialbahn durch ein Vakuum im Bereich der Übertragungseinheiten und somit in einem Bereich, in dem sich die erste und die zweite Materialbahn überlappen, um die Materialbahnverbindungsstelle zu erzeugen, zu halten.

In einer Ausführungsform wird die erste Materialbahn durchtrennt, während die Siegelleisten noch in Kontakt mit der ersten und zweiten Materialbahn stehen. Alternativ kann das Durchtrennen der ersten Materialbahn erst dann durchgeführt werden, wenn die Siegelleisten nicht mehr in Kontakt mit den beiden Materialbahnen stehen. Nach dem Durchtrennen der ersten Materialbahn verbleibt ein Reststück der Materialbahn auf dem ersten, auslaufenden Coil und die erste Materialbahn und die zweite Materialbahn werden als kontinuierliche, quasi endlose Materialbahn in den Prozess gefördert und dort weiterverarbeitet.

In einer Ausführungsform weisen die erste Übergabeeinheit und die zweite Übergabeeinheit jeweils eine Rückplatte auf, wobei die erste und die zweite Vakuumplatte jeweils mittels zumindest einer Federlagerung mit der Rückplatte gekoppelt sind, und die Siegelleiste auf der Rückplatte angeordnet ist. Die erste Vakuumplatte und zweite Vakuumplatte stehen somit, insbesondere solange die beiden Übertragungseinheiten nicht miteinander in Kontakt sind, der Siegelleiste vor, wodurch ein Spalt zwischen der Siegelleiste und der Materialbahn gebildet ist, d.h., die Siegelleiste und die Materialbahn sind in diesem Zustand nicht miteinander in Kontakt. Die erste Übergabeeinheit und zweite Übergabeeinheit werden aufeinander zu bewegt, so dass zunächst die erste Vakuumplatte und die zweite Vakuumplatte der ersten Übergabeeinheit in Kontakt mit der ersten, auslaufenden Materialbahn gebracht wird. Die zweite, neue Materialbahn wurde zuvor in die Vorrichtung eingebracht und wird zu diesem Zeitpunkt durch das Vakuum an der zweiten Übertragungseinheit gehalten. Wenn sich die beiden Übertragungseinheiten, insbesondere die Vakuumplatten der beiden Übertragungseinheiten (mit den beiden Materialbahnen zwischen sich angeordnet) berühren, werden die Federlagerungen durch eine andauernde Bewegung der Übertragungseinheiten aufeinander zu komprimiert und so die Siegelleisten in Kontakt mit der ersten und zweiten Materialbahn gebracht. Diese Vorgehensweise hat den Vorteil, dass die Zeit, Temperatur und Druck des Schweißvorgangs (mittels der Siegelleisten) besser kontrolliert werden können und somit eine zuverlässigere Schweißverbindung hergestellt werden kann.

Die Erfindung schafft auch die Verwendung der Vorrichtung nach einem der hierin beschriebenen Ausführungsbeispiele zur Großserienherstellung von Energiezellen.

Die Energiezelle kann eine Batteriezelle oder eine Brennstoffzelle sein. Die Gestaltung der Batteriezelle oder Brennstoffzelle kann unterschiedlich sein. Beispielsweise kann die Batterie eine Separatorbahn mit einer Z-Faltung zwischen den Elektroden oder eine laminierte Anordnung haben.

Ein Ausführungsbeispiel wird im Folgenden anhand der beigefügten Zeichnungen näher erläutert. Darin zeigt:
- Fig. 1: eine schematische Darstellung einer Zellherstellvorrichtung für die Großserienherstellung von Energiezellen.
- Fig. 2: eine schematische Darstellung einer Vorrichtung zur Verbindung zweier Materialbahnen gemäß einer beispielhaften Ausführungsform.
- Fig. 3: eine schematische Darstellung eines Splicevorgangs gemäß einer beispielhaften Ausführungsform.
- Fig. 4: eine perspektivische Ansicht von vorne einer ersten Übergabeeinheit, die bei dem Splicevorgang der Fig. 3 verwendet werden kann.
- Fig. 5: eine perspektivische Ansicht von hinten der ersten Übergabeeinheit aus Fig. 4.
- Fig. 6: eine perspektivische Ansicht von vorne einer zweiten Übergabeeinheit, die bei dem Splicevorgang der Fig. 3 verwendet werden kann.
- Fig. 7: eine perspektivische Ansicht von hinten der zweiten Übergabeeinheit aus Fig. 6.
- Fig. 8: eine schematische Darstellung eines Verfahrens zur Verbindung zweier Materialbahnen gemäß einer beispielhaften Ausführungsform.

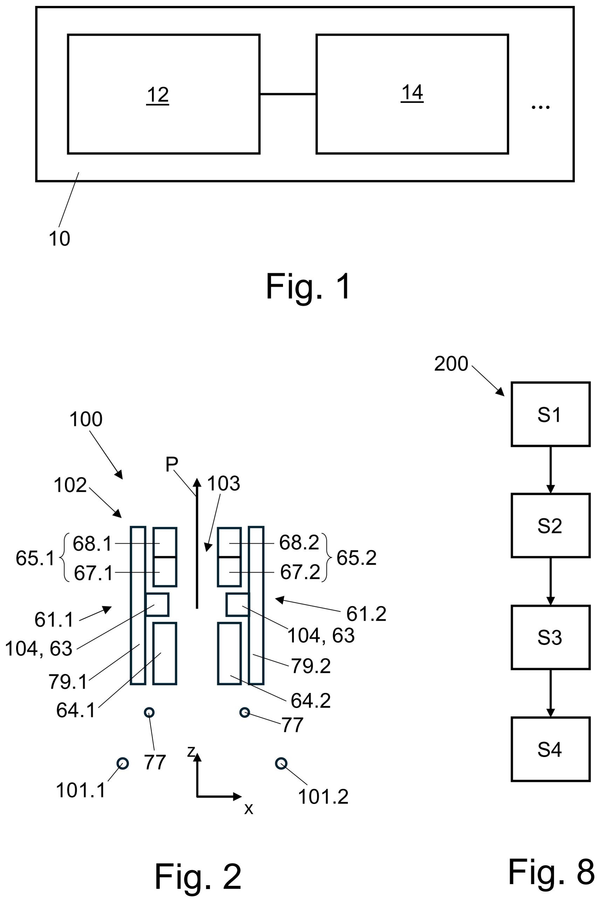

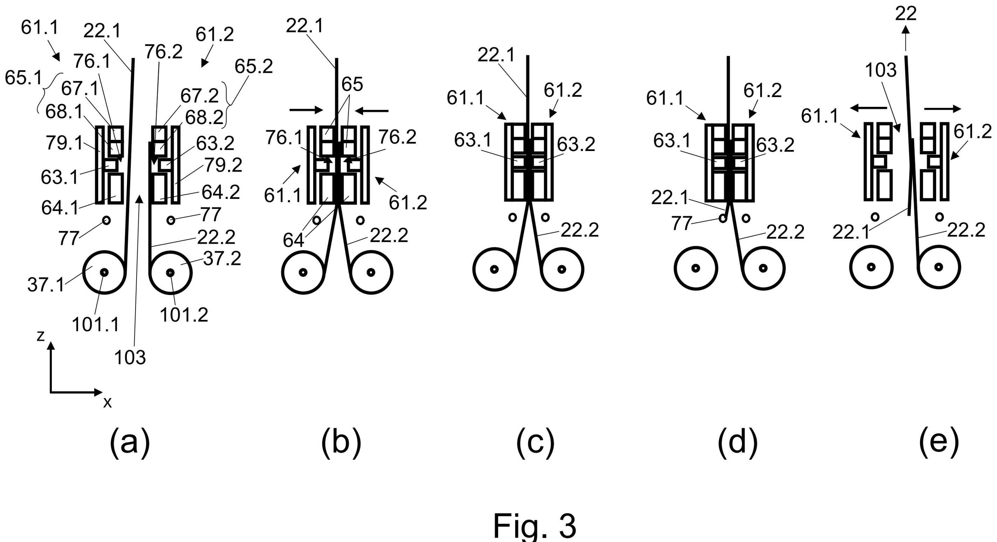

Fig. 1 zeigt eine schematische Blockdarstellung einer Zellherstellvorrichtung 10 zum Herstellen von Zellen, die beispielsweise in einer Großserienanlage zur Herstellung von Batterien, insbesondere für Elektrofahrzeuge, verwendet werden kann. Die Zellherstellvorrichtung 10 umfasst unter anderem eine Materialeinbringeinrichtung 12 und eine Zellkörper-Herstelleinrichtung 14. Die Materialeinbringeinrichtung 12 ist dazu eingerichtet, das für die Herstellung der Zellkörper, insbesondere Zellstapel, erforderliche Material in die Zellherstellvorrichtung und den Zellherstellprozess einzubringen. In der Regel wird das erforderliche Material, insbesondere ein Separatormaterial und/oder ein Elektrodenmaterial, wie bspw. ein Anodenmaterial und/oder ein Kathodenmaterial, als auf Coils 37 (siehe Fig. 3) aufgewickelte Materialbahnen bereitgestellt. Die Zellkörper-Herstelleinrichtung 14 ist dazu eingerichtet, den Zellkörper herzustellen. Der Zellkörper kann auf unterschiedliche Arten hergestellt werden. So unterscheidet man grundsätzlich zwischen Rundzellen, prismatische Zellen und Pouchzellen. Rundzellen werden in der Regel durch ein Wickeln der Elektrodenmaterialien und des Separatormaterials hergestellt. Die Zellkörper für prismatische Zellen und Pouchzellen werden als Zellstapel, bspw. mittels Lamination oder Z-Falten, hergestellt.

Die Materialzuführung erfolgt insbesondere auf Coils 37 (Materialrollen). Wenn sich die Materialbahn auf dem Coil 37 dem Ende neigt, d.h., wenn nur noch wenig Materialbahn auf dem Coil 37 aufgewickelt vorhanden ist, muss das Coil gewechselt werden und die Materialbahn des neuen Coils mit der auslaufenden Materialbahn des alten Coils verbunden werden. Dies geschieht vorzugsweise im Prozesslauf, während die alte Materialbahn von dem Coil abgewickelt wird, damit eine quasi endlose Materialbahn bereitgestellt wird.

Fig. 2 zeigt schematisch und beispielhaft eine Ausführungsform einer Vorrichtung 100 zur Verbindung zweier Materialbahnen, die hier beispielhaft als Separatorbahnen 22 (siehe Fig. 3) ausgebildet sind, bei einem Coilwechsel. Die erfindungsgemäße Vorrichtung 100 ist jedoch nicht auf die Verwendung in der Zellherstellvorrichtung 10 beschränkt und kann bei einer beliebigen Anlage verwendet werden, bei der ein Coil einer Materialbahn derart gewechselt werden soll, dass die Materialbahn kontinuierlich, quasi unendlich erscheint.

Die Vorrichtung 100 und der vorstehend und nachfolgend beschriebene Splicevorgang können bei der Herstellung von Batteriezellen verwendet werden. Insbesondere eignen sie sich für die Herstellung von Monozellen und/oder Zellkörpern, weiter insbesondere Zellstacks. Diese können mittels unterschiedlicher Verfahren, wie bspw. Lamination, Z-Falten oder Wickeln, hergestellt werden.

Eine Vorrichtung 100 zur Verbindung von zwei Materialbahnen bei einem Coilwechsel wird nun in Verbindung mit Figs. 2 bis 7 beschrieben. Die Vorrichtung 100 kann verwendet werden, um eine erste Separatorbahn 22.1 eines auslaufenden Coils 37.1 mit einer zweiten Separatorbahn 22.2 eines neuen Coils 37.2 zu verbinden, insbesondere zu verschweißen, damit das auslaufende Coil 37.1 durch das neue Coil 37.2 ersetzt wird, wobei die erste (auslaufende) Separatorbahn 22.1 und die zweite (neue) Separatorbahn 22.2 miteinander verbunden werden, um eine kontinuierliche, quasi endlose, Separatorbahn 22 zu bilden. Die Vorrichtung 100 kann jedoch für andere Arten von Materialbahnen verwendet werden.

Fig. 3 zeigt schematisch und beispielhaft schrittweise einen Splicevorgang 60, also einen Vorgang zur Verbindung der ersten (auslaufenden) Separatorbahn 22.1 mit der zweiten (neuen) Separatorbahn 22.2. zur Erzeugung der kontinuierlichen, quasi endlosen, Separatorbahn 22, der mit der Vorrichtung 100 (siehe Fig. 2) durchgeführt wird. Der Splicevorgang 60 ist jedoch nicht auf die Anwendung auf Separatorbahnen 22 beschränkt und kann für andere Arten von Materialbahnen verwendet werden.

Die in Fig. 2 schematisch und beispielhaft gezeigte Vorrichtung 100 umfasst eine erste Coilaufnahme 101.1 zur Aufnahme eines auslaufenden Coils 37.1 einer ersten Materialbahn, hier beispielhaft eine erste Separatorbahn 22.1, eine zweite Coilaufnahme 101.2 zur Aufnahme eines neuen Coils 37.2 einer zweiten Materialbahn, hier beispielhaft eine zweite Separatorbahn 22.2, und eine Spliceeinrichtung 102 zur Verbindung der ersten Materialbahn 22.1 des auslaufenden Coils 37.1 mit der zweiten Materialbahn 22.2 des neuen Coils 37.2.

Die Spliceeinrichtung 102 umfasst eine erste Übergabeeinheit 61.1 für die erste Materialbahn 22.1 und eine zweite Übergabeeinheit 61.2 für die zweite Materialbahn 22.2, die einander gegenüberliegend angeordnet sind und so eine Materialbahnverbindungsstelle 103 zwischen sich ausbilden, in die die erste und zweite Materialbahn 22.1, 22.2 in Prozessrichtung P (hier beispielhaft die z-Richtung) gezogen werden.

Die erste Übergabeeinheit 61.1 und die zweite Übergabeeinheit 61.2 sind im Wesentlichen in x-Richtung aufeinander zu und voneinander weg bewegbar, um die erste Materialbahn 22.1 bzw. die zweite Materialbahn 22.2 zu kontaktieren und miteinander zu verbinden, insbesondere zu verschweißen. Für diesen Zweck umfasst die Spliceeinrichtung 102 Mittel 104 zum Aufheizen der ersten und zweiten Materialbahn 22.1, 22.2, um die erste und zweite Materialbahn 22.1, 22.2 lokal so zu erwärmen, dass das Material der Materialbahnen 22.1, 22.2 lokal schmilzt und eine stoffschlüssige Verbindung ausbildet, durch die die Materialbahnen 22.1, 22.2. miteinander verbunden werden. So können die Materialbahnen 22.1, 22.2 ohne den Einsatz von einem zusätzlichen Klebstoff miteinander verbunden werden. Die Mittel 104 zum Aufheizen der ersten und der zweiten Materialbahn 22.1, 22.2 sind in Fig. 2 bis Fig. 7 beispielhaft als Siegelleisten 63 ausgebildet.

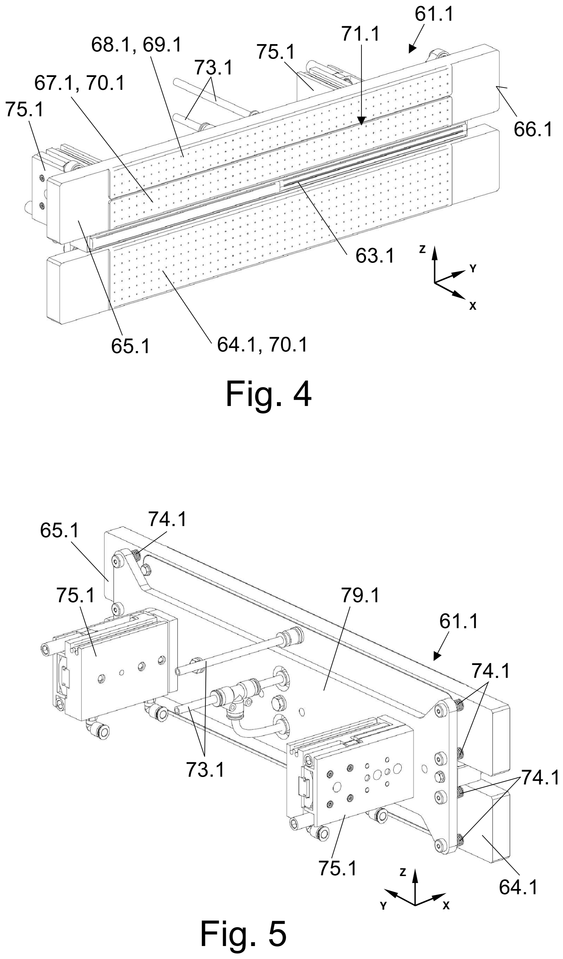

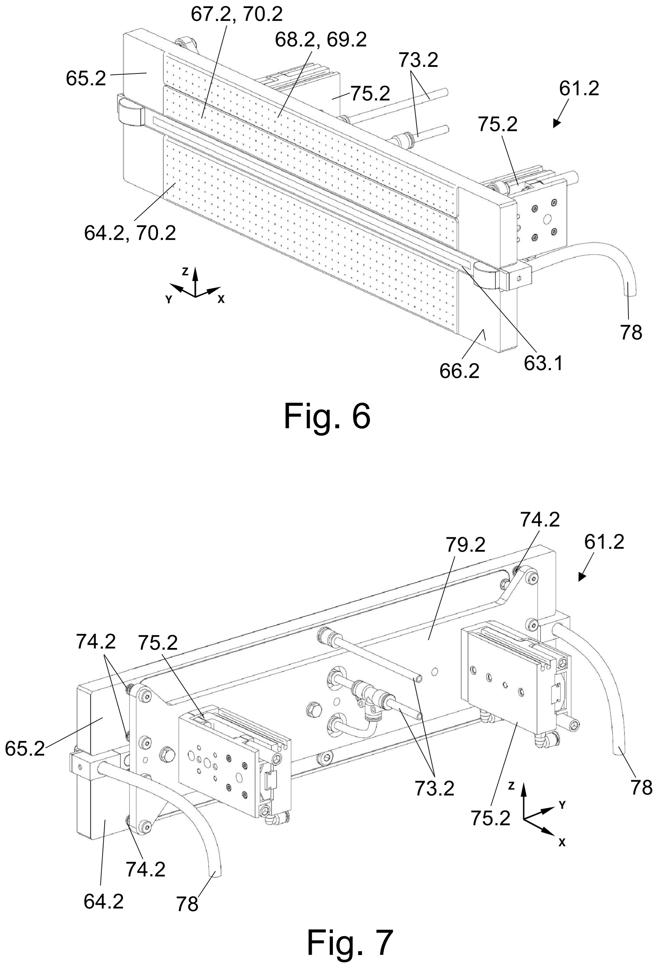

Figs. 4 bis 7 zeigen eine Übergabeeinheit 61.1, 61.2 gemäß beispielhafter Ausführungsformen, die bei dem Splicevorgang der Fig. 3 verwendet werden können, wobei die Figs. 4 und 5 beispielhaft die erste Übergabeeinheit 61.1 von vorne (Fig. 4) und von hinten (Fig. 5) mit einer passiven, also nicht beheizbaren, Siegelleiste 63.1 zeigen und Figs. 6 und 7 beispielhaft die zweite Übergabeeinheit 61.2 mit einer aktiven, also beheizbaren, Siegelleiste 63.2 zeigen. An dieser Stelle ist zu beachten, dass auch die erste Übergabeeinheit 61.1 die aktive, also beheizbare Siegelleiste 63.2 und die zweite Übergabeeinheit 61.2 die passive, also nicht beheizbare, Siegelleiste 63.1 umfassen kann. Mit anderen Worten kann man sagen, dass die Spliceeinrichtung 102 zwei Siegelleisten 63 umfasst, wovon eine erste als eine passive, also nicht beheizbare, Siegelleiste 63.1 ausgebildet ist und eine zweite als eine aktive, also beheizbare, Siegelleiste 63.2 ausgebildet ist. Es ist jedoch auch denkbar, dass beide Siegelleisten beheizbar sind.

Die Übergabeeinheiten 61.1, 61.2 umfassen jeweils eine erste (in Figs. 4 bis 7 untere) Vakuumplatte 64.1, 64.2 und eine zweite (in Figs. 4 bis 7 obere) Vakuumplatte 65.1, 65.2, zwischen denen die jeweiligen Siegelleisten 63.1, 63.2 angeordnet sind. Die erste Vakuumplatte 64.1, 64.2 ist einteilig ausgeführt und die zweite Vakuumplatte 65.1, 65.2 ist hier beispielhaft zweigeteilt ausgeführt, wobei auf einer Vorderseite 66.1, 66.2 der Übergabeeinheit 61.1, 61.2 (siehe Fig. 4 bzw. Fig. 6) ein erster Teil 67.1, 67.2 der zweiten Vakuumplatte 65.1, 65.2 einen zweiten Vakuumbereich 69.1, 69.2 bildet und ein zweiter Teil 68.1, 68.2 der zweiten Vakuumplatte 65.1, 65.2 zusammen mit der ersten Vakuumplatte 64.1, 64.2 einen zweiten Vakuumbereich 70.1, 70.2 bildet.

Wie in Figs. 4 und 6 zu erkennen, ist zwischen dem ersten Teil 67.1, 67.2 und dem zweiten Teil 68.1, 68.2 der zweiten Vakuumplatte 65.1, 65.2 eine Vertiefung 71.1, 71.2, bspw. eine Nut, eine Rille etc., vorgesehen, die zur Führung eines Messers (nicht dargestellt) dient. Die zweiteilige Ausführung der zweiten Vakuumplatte 65.1, 65.2 und/oder die Vorsehung der Vertiefung 71.1, 71.2 ist optional. Für den Fall, dass die zweite Vakuumplatte 65.1, 65.2 einteilig ausgeführt ist, bilden die erste Vakuumplatte 64.1, 64.2 und die zweite Vakuumplatte 65.1, 65.2 einen einzelnen, gemeinsamen Vakuumbereich aus.

Auf einer Rückseite 72.1, 72.2 der Übergabeeinheit 61.1, 61.2, die in Figs. 5 und 7 zu sehen ist, sind Anschlüsse 73.1, 73.2 für die Vakuumbereiche 69.1, 70.1; 69.2, 70.2 und die Anschlüsse zur Stromversorgung 78 (nur Fig. 7) zum Beheizen der Siegelleiste 63.2 der zweiten Übergabeeinheit 61.2 vorgesehen. Ferner weisen die Übergabeeinheiten 61.1, 61.2 auf der Rückseite 72.1, 72.2 jeweils eine Rückplatte 79.1, 79.2 auf (siehe Figs. 5 und 7), an denen Hubzylinder 75.1, 75.2 zum Bewegen der Übergabeeinheiten 61.1, 61.2, insbesondere aufeinander zu und voneinander weg, angeordnet sind. In manchen Ausführungsbeispielen ist die Prozessrichtung P und somit die Bewegungsrichtung der Separatorbahnen 22.1, 22.2 im Wesentlichen in der z-Richtung, in Figs. 2 und 3 also im Wesentlichen vertikal nach oben. In dieser Anordnung sind die Übergabeeinheiten 61.1, 61.2 mittels der Hubzylinder 75.1, 75.2 in der x-Richtung bewegbar. In den Figs. 4 bis 7 sind beispielhaft jeweils zwei Hubzylinder 75.1 bzw. 75.2 pro Übergabeeinheit 61.1 bzw. 61.2 vorgesehen. Es sind jedoch aus Ausführungsformen mit nur einem Hubzylinder oder mehr als 2 Hubzylinder pro Übergabeeinheit denkbar.

Darüber hinaus sind die ersten Vakuumplatten 64.1 64.2 sowie die zweiten Vakuumplatten 65.1, 65.2 über Federlagerungen 74.1, 74.2 mit der Rückplatte 79.1, 79.2 der Übergabeeinheit 61.1, 61.2 gekoppelt. Die Federlagerungen 74.1, 74.2 ermöglichen es, dass die Vakuumplatten 64 (64.1, 64.2) und 65 (65.1, 65.2), wie insbesondere in Figs. 5 und 7 zu sehen ist, in der x-Richtung von der Rückplatte 79.1, 79.2 und somit von den daran angeordneten Siegelleisten 63.1, 63.2 durch die Federkraft derart weggedrückt werden, dass die Vakuumplatten 64.1, 64.2, 65.1, 65.2 in x-Richtung gesehen in Richtung zur Materialbahnverbindungsstelle 103 hin von den Siegelleisten 63.1, 63.2 vorstehen. Dadurch wird ein Spalt 76.1, 76.2 zwischen der Siegelleiste 63.1, 63.2 und der jeweiligen Separatorbahn 22.1, 22.2 (siehe Fig. 3 (b)) bzw. der jeweiligen Vorderseiten der Vakuumplatten 64, 65 gebildet, der eine frühzeitige Berührung der Separatorbahnen 22.1, 22.2 mit den Siegelleisten 63.1, 63.2 und somit ggf. eine frühzeitige Erhitzung der Separatorbahnen 22.1, 22.2 verhindert.

Mit Bezug zu Fig. 3 wird nun der Splicevorgang 60 beispielhaft beschrieben. Zum Verbinden einer alten, sich im Prozess befindlichen Separatorbahn 22.1 mit einer neuen Separatorbahn 22.2 wird die Vorrichtung 100 (siehe Fig. 2) verwendet, wobei hier beispielhaft die erste Übergabeeinheit 61.1 der alten Separatorbahn 22.1 und die zweite Übergabeeinheit 61.2 der neuen Separatorbahn 22.2 zugeordnet ist. Eine umgekehrte Anordnung ist ebenfalls möglich, bzw. ergibt sich durch einen häufigeren Coilwechsel automatisch. Die Übergabeeinheiten 61.1, 61.2 sind dabei so angeordnet, dass die Separatorbahnen 22.1, 22.2 zwischen den Übergabeeinheiten 61.1, 61.2 angeordnet sind, wie in Fig. 3 zu sehen ist.

Bevor mit dem Splicevorgang 60, also dem Kontaktieren und Verbinden der beiden Separatorbahnen 22.1, 22.2, begonnen wird, wird eine Vorbereitung der Übergabeeinheit 61.2 für die neu in den Prozess einzubringende Separatorbahn 22.2 erfolgen. Hierfür wird die neue Separatorbahn 22.2 über die gesamte Übergabeeinheit 61.2 gelegt, und mittels beider Vakuumplatten 64.2, 65.2, also aller Vakuumbereiche 69.2, 70.2, angesogen und fixiert. Im Anschluss wird das freiliegende Ende der neuen Separatorbahn 22.2 abgetrennt bzw. durchtrennt. Für diese Tätigkeit ist in der zweiten (oberen) Vakuumplatte 65.2 die Vertiefung 71.2 integriert, welche zur Führung eines Messers, mit dem die Separatorbahn 22.2 durchtrennt wird, dient. Dieses Durchtrennen kann beispielsweise manuell von einem Werker/Bearbeiter oder (teil-) automatisiert durchgeführt werden.

Nach dem Durchtrennen der neuen Separatorbahn 22.2, wird der zweite Vakuumbereich 69.2 im zweiten Teil 68.2 der zweiten Vakuumplatte 65.5 deaktiviert, wodurch der überschüssige, jetzt vom Rest der Separatorbahn 22.2 getrennte Teil entfernt werden kann. Somit hat die neue Separatobahn 22.2 nun eine saubere und für den Splicevorgang 60 geeignete Endkante. Das Vakuum im ersten Vakuumbereich 70.2, das heißt, das Vakuum am ersten Teil 67.2 der zweiten Vakuumplatte 65.2 und das Vakuum an der ersten (unteren) Vakuumplatte 64.2, bleiben nach wie vor erhalten und hält den weiterhin benötigten Teil der Separatorbahn 22.2, wie schematisch in Fig. 3, Schritt (a) dargestellt ist.

Sobald die Übergabe von dem alten Coil 37.1 zu dem neuen Coil 37.2, insbesondere der Splicevorgang 60 zum Verbinden der alten und der neuen Separatorbahn 22.1, 22.2, mittels der Siegelleisten 63.1, 63.2 erfolgen soll, wird zunächst die beheizbare Siegelleiste 63.2 auf die gewünschte Temperatur erwärmt. Dies ist möglich, da die Separatorbahn 22.2 die Siegelleiste 63.2 vor der Übergabe noch nicht berührt, wie in Fig. 3 Schritt (a) dargestellt ist. Die Separatorbahn 22.2 wird weiterhin von dem ersten Vakuumbereich 70.2 in der unteren Vakuumplatte 64.2 und der ersten Teil 67.2 der oberen Vakuumplatte 65.2 gehalten.

Für die Übergabe, insbesondere für den eigentlichen Splicevorgang, also dem Verbinden der beiden Separatorbahnan 22.1, 22.2, werden die Hub-Zylinder 75 (75.1, 75.2) in beiden Übergabeeinheiten 61.1, 61.2 ausgefahren. Dadurch werden die Übergabeeinheiten 61.1, 61.2 (in Fig. 3 in x-Richtung) aufeinander zu bewegt und treffen sich im Wesentlichen in der Mitte. Dabei kommen zunächst die Vakuumplatten 64, 65 beider Übergabeeinheiten 61.1, 61.2 in Kontakt, wie in Fig.3 Schritt (b) schematisch dargestellt, wobei die beiden Separatorbahnen 22.1, 22.2 zwischen den Vakuumplatten 64, 65 der beiden Übergabeeinheiten 61.1, 61.2 angeordnet sind und somit in diesem Bereich miteinander in Kontakt gebracht werden, weshalb dieser Bereich auf als Überlappungsbereich der Separatorbahnen 22.1, 22.2 bezeichnet werden kann.

Durch den Kontakt der Vakuumeinheiten 64, 65 und dem weiterhin aktiven Vorschub der Hub-Zylinder 75, der entgegen der Federkraft der jeweiligen Federlagerungen 74 (74.1, 74.2) wirkt, werden nun die Federlagerungen 74 aller Vakuumplatten 64, 65 komprimiert. Durch das Komprimieren der Federlagerungen 74 wird der jeweilige Spalt 76 (76.1, 76.2) zwischen den Separatorbahnen 22.1, 22.2 und den Siegelleisten 63.1, 63.2 zunehmend kleiner, bis er nicht mehr vorhanden ist. Der Hub-Zylinder 75 kommt erst dann zum Stehen, wenn sich die Siegelleisten 63.1, 63.2 gegenseitig berühren. Zwischen den beiden Siegelleisten 63.1, 63.2 befinden sich nun die alte und die neue Separatorbahn 22.1, 22.2. Die Siegelleiste 63.1 ist in Kontakt mit der Separtorbahn 22.1 und die Siegelleiste 63.2 ist mit der Separatorbahn 22.2 in Kontakt. Ferner berühren sich beiden Separatorbahnen 22.1, 22.2 und werden nun durch die Hitze der aktiven Siegelleiste 63.2 lokal derart erwärmt, dass das Material der Separatorbahnen 22.1, 22.2 lokal schmilzt und sich dadurch eine stoffschlüssige Verbindung zwischen den beiden Separatorbahnen 22.1, 22.2 ausbildet (siehe Fig. 3, Schritt (c)). Eine solche Verbindung wird auch als Verschweißen bezeichnet, und ermöglicht eine Verbindung ohne den Einsatz eines Splice-Tapes oder eines zusätzlichen Klebstoffs.

Wie in Fig. 3, Schritt (d) beispielhaft gezeigt, wird die alte Separatorbahn 22.1 nun mittels eines Heißdrahtes 77 durchtrennt, während die Siegelleisten 63.1, 63.2 noch miteinander in Kontakt sind. In den Figuren nicht gezeigt, jedoch auch denkbar ist, dass die alte Separatorbahn 22.1 erst durchtrennt wird, nachdem die Siegelleisten 63.1, 63.2 nicht mehr in Kontakt miteinander sind (z.B. während oder nach Schritt (e)). Im Anschluss und nach Ablauf eines vorab gewählten, einstellbaren Zeitintervalls werden die noch aktiven Vakuumbereiche deaktiviert und die Hub-Zylinder 75 beider Übergabeeinheiten 61.1, 61.2 fahren wieder ein, wodurch die beiden Übergabeeinheiten 61.1, 61.2 wieder voneinander weg bewegt werden, und die Übergabe der Separatorbahn, insbesondere das Zusammenführen und Verbinden der alten und der neuen Separatorbahn 21.1, 22.2 abgeschlossen ist, siehe Fig. 3, Schritt (e). Der Prozess wird dann mit der neuen Separatorbahn 22.2 fortgesetzt. Der Splicevorgang, der in Fig. 3 dargestellt ist, kann während des Prozesses durchgeführt werden, so dass das Herstellungsverfahren nicht unterbrochen werden muss, um das alte Coil 37.1 durch das neue Coil 37.2 zu ersetzen. Lediglich während des eigentlichen Verbindungsvorgangs kann es erforderlich sein, die Bahnen für einen kurzen Moment zu stoppen.

Fig. 8 zeigt schematisch und beispielhaft ein Verfahren 200 zur Verbindung zweiter Materiabahnen als Flussdiagramm. Das Verfahren 200 umfasst die nachfolgend genannten Schritte, wobei diese nicht zwingend in der hier angegeben Reihenfolge durchgeführt werden müssen:
Schritt S1: Bereitstellen einer ersten Coilaufnahme 101.1 zur Aufnahme eines ersten (auslaufenden) Coils 37.1 einer ersten Materialbahn 22.1;
Schritt S2: Bereitstellen einer zweiten Coilaufnahme 101.2 zur Aufnahme eines zweiten (neuen) Coils 37.2 einer zweiten Materiabahn 22.2.;
Schritt S3: Bereitstellen einer Spliceeinrichtung 102 zur Verbindung der ersten Materialbahn 22.1 des auslaufenden Coils 37.1 mit der zweiten Materialbahn 22.2 des neuen Coils 37.2
Schritt S4: Verschweißen, mittels der Spliceeinrichtung 102, der ersten Materialbahn 22.1 und der zweiten Materialbahn 22.2 miteinander.

### Bezugszeichenliste:

- 10: Zellherstellvorrichtung
- 12: Materialeinbringeinrichtung
- 14: Zellkörper-Herstelleinrichtung
- 22: Separator
- 22.1: erste Separatorbahn
- 22.2: zweite Separatorbahn
- 37: Coil
- 37.1: auslaufendes Coil
- 37.2: neues Coil
- 60: Splicevorgang
- 61.1: erste Übergabeeinheit
- 61.2: zweite Übergabeeinheit
- 63: Siegelleiste
- 63.1: passive (nicht beheizbare) Siegelleiste
- 63.2: aktive (beheizbare) Siegelleiste
- 64.1, 64.2: erste Vakuumplatte
- 65.1, 65.2: zweite Vakuumplatte
- 66.1, 66.2: Vorderseite
- 67.1, 67.2: erster Teil der zweiten Vakuumplatte
- 68.1, 68.2: zweiter Teil der zweiten Vakuumplatte
- 69.1, 96.2: zweiter Vakuumbereich
- 70.1, 70.2: erster Vakuumbereich
- 71.1, 71.2: Vertiefung
- 73.1, 73.2: Anschlüsse für die Vakuumbereiche
- 74.1, 74.2: Federlagerung
- 75.1, 75.2: Hubzylinder
- 76.1, 76.2: Spalt
- 77: Heißdraht
- 78: Anschlüsse zur Stromversorgung
- 79.1, 79.2: Rückplatte
- 100: Vorrichtung
- 101.1: erste Coilaufnahme
- 101.2: zweite Coilaufnahme
- 102: Spliceeinrichtung
- 103: Materialbahnverbindungsstelle
- 104: Mittel zum Aufheizen
- 200: Verfahren

- P: Prozessrichtung

## Patentansprüche

1. Vorrichtung (100) zur Verbindung zweier Materialbahnen (22.1, 22.2), beispielsweise zweier Separatorbahnen einer Energiezelle, bei einem Coilwechsel, umfassend:
eine erste Coilaufnahme (101.1) zur Aufnahme eines ersten Coils (37.1) einer ersten Materialbahn (22.1),
eine zweite Coilaufnahme (101.2) zur Aufnahme eines zweiten Coils (37.2) einer zweiten Materialbahn (22.2),
eine Spliceeinrichtung (102) zur Verbindung der ersten Materialbahn (22.1) des ersten Coils (37.1) mit der zweiten Materialbahn (22.2.) des zweiten Coils (37.2),
**dadurch gekennzeichnet, dass**
die Spliceeinrichtung (102) Mittel zum Aufheizen (104) der ersten und zweiten Materialbahn (22.1, 22.2) aufweist, um die erste und zweite Materialbahn (22.1, 22.2) miteinander zu verschweißen.

2. Vorrichtung (100) nach Anspruch 1, **dadurch gekennzeichnet, dass**
die Spliceeinrichtung (102) ferner eine erste Übergabeeinheit (61.1) für die erste Materialbahn (22.1) und eine zweite Übergabeeinheit (61.2) für die zweite Materialbahn (22.2) umfasst, die auf gegenüberliegenden Seiten einer Materialbahnverbindungsstelle (103) angeordnet sind, wobei die erste Übergabeeinheit (61.1) und die zweite Übergabeeinheit (61.2) aufeinander zu und voneinander weg bewegbar sind, um die erste bzw. die zweite Materialbahn (22.1, 22.2) zu kontaktieren und miteinander zu verschweißen.

3. Vorrichtung (100) nach Anspruch 2, **dadurch gekennzeichnet, dass**
die erste Übergabeeinheit (61.1) und die zweite Übergabeeinheit (61.2) jeweils eine Siegelleiste (63.1, 63.2) aufweisen, wobei zumindest eine der Siegelleisten (63.1, 63.2) beheizbar ist und die Mittel (104) zum Aufheizen bereitstellt.

4. Vorrichtung (100) nach Anspruch 2 oder Anspruch 3, **dadurch gekennzeichnet, dass**
die erste Übergabeeinheit (61.1) und die zweite Übergabeeinheit (61.2) jeweils ferner eine erste Vakuumplatte (64.1; 64.2) und eine zweite Vakuumplatte (65.1; 65.2) aufweisen, zwischen denen die Siegelleiste (63.1; 63.2) angeordnet ist, wobei die erste Vakuumplatte (64.1; 64.2), die zweite Vakuumplatte (65.1; 65.2) und die Siegelleiste (63.1; 63.2) eine Andrückfläche bilden, die an die erste bzw. die zweite Materialbahn (22.1, 22.2) andrückbar ist.

5. Vorrichtung (100) nach Anspruch 4, **dadurch gekennzeichnet, dass**
die erste Vakuumplatte (64.1; 64.2) und die zweite Vakuumplatte (65.1; 65.2) relativ zu der Siegelleiste (63.1; 63.2) bewegbar sind und die Siegelleiste (63.1; 63.2) relativ zu der ersten Vakuumplatte (64.1; 64.2) und zweiten Vakuumplatte (65.1; 65.2) bewegbar ist.

6. Vorrichtung (100) nach Anspruch 4 oder Anspruch 5, **dadurch gekennzeichnet, dass**
die zweite Vakuumplatte (65.1; 65.2) einen ersten Teil (67.1; 67.2) und einen zweiten Teil (68.1; 68.2) aufweist, wobei der erste Teil (67.1; 67.2) der zweiten Vakuumplatte (65.1; 65.2) und die erste Vakuumplatte (64.1; 64.2) zusammen einen ersten Vakuumbereich (70.1; 70.2) bilden und der zweite Teil (68.1; 68.2) der zweiten Vakuumplatte (65.1; 65.2) einen zweiten Vakuumbereich (69.1; 69.2) bildet.

7. Vorrichtung (100) nach einem der Ansprüche 2 bis 6, **dadurch gekennzeichnet, dass**
7.1 die erste Übergabeeinheit (61.1) und die zweite Übergabeeinheit (61.2) jeweils eine Rückplatte (79.1; 79.2) aufweisen, wobei die erste Vakuumplatte (64.1; 64.2) und die zweite Vakuumplatte (65.1; 65.2) jeweils mittels wenigstens einer Federlagerung (74.1; 74.2) mit der Rückplatte (79.1; 79.2) gekoppelt sind, und die Siegelleiste (63.1, 63.2) auf der Rückplatte (79.1; 79.2) angeordnet ist, und/oder
7.2 die erste Übergabeeinheit (61.1) und die zweite Übergabeeinheit (61.2) jeweils eine Rückplatte (79.1; 79.2) aufweisen, und die Rückplatte (79.1; 79.2) mit je einem Hubzylinder (75.1; 75.2) gekoppelt ist, um die erste bzw. zweite Übergabeeinheit (61.1, 61.2) auf die Materialbahnverbindungsstelle (103) zu und von dieser weg zu bewegen, und/oder
7.3 zumindest die zweite Übergabeeinheit (61.2) eine längliche Vertiefung (71.2) zur Führung eines Messers aufweist, die zwischen dem ersten Teil (67.2) und dem zweiten Teil (68.2) der zweiten Vakuumplatte (65.2) angeordnet ist, und/oder
7.4 die Spliceeinrichtung (102) Trennmittel umfasst, um die erste Materialbahn (22.1) durchzutrennen, und/oder
7.5 die Spliceeinrichtung (102) Trennmittel umfasst, um die erste Materialbahn (22.1) durchzutrennen, wobei die Trennmittel einen beheizbaren Draht (77) aufweisen, und/oder
7.6 die Spliceeinrichtung (102) Mittel zum Regeln der Temperatur der beheizbaren Siegelleiste (63.2) aufweist, und/oder
7.7 die Spliceeinrichtung (102) Mittel zum Regeln der Andrückdauer der Siegelleiste der ersten und zweiten Übergabeeinheit (61.1, 61.2) aufweist.

8. Anlage (10) zur Großserienherstellung von Energiezellen, umfassend die Vorrichtung (100) nach einem der Ansprüche 1 bis 7.

9. Verfahren (200) zur Verbindung zweier Materialbahnen (22.1, 22.2), beispielsweise zweier Separatorbahnen einer Energiezelle bei einem Coilwechsel, umfassend:
Bereitstellen einer ersten Coilaufnahme (101.1) zur Aufnahme eines ersten Coils (37.1) einer ersten Materialbahn (22.1);
Bereitstellen einer zweiten Coilaufnahme (101.2) zur Aufnahme eines zweiten Coils (37.2) einer zweiten Materialbahn (22.2);
Bereitstellen einer Spliceeinrichtung (102) zur Verbindung der ersten Materialbahn (22.1) des ersten Coils (37.1) mit der zweiten Materialbahn (22.2) des zweiten Coils (37.2), wobei die Spliceeinrichtung (102) Mittel (104) zum Aufheizen der ersten und zweiten Materialbahn (22.1, 22.2) aufweist;
Verschweißen, mittels der Spliceeinrichtung 102, der ersten und der zweiten Materialbahn (22.1, 22.2) miteinander.

10. Verfahren (200) nach Anspruch 9, ferner aufweisend:
Überlappen der zweiten Materialbahn (22.2) des zweiten Coils (37.2) mit der ersten Materialbahn (22.2) des ersten Coils (37.1),
lokales Erhitzen der ersten und zweiten Materialbahn (22.1, 22.2), um die erste Materialbahn (22.1) und die zweite Materialbahn (22.2) miteinander zu verschweißen.

11. Verfahren (200) nach Anspruch 9 oder Anspruch 10, ferner umfassend:
Anordnen der überlappenden ersten und zweiten Materialbahn (22.1, 22.2) zwischen einer ersten Übergabeeinheit (61.1) und einer zweiten Übergabeeinheit (61.2), wobei die erste Übergabeeinheit (61.1) und die zweite Übergabeeinheit (61.2) jeweils eine Siegelleiste (63.1, 63.2) aufweisen, und wenigstens eine der Siegelleisten (63.2) beheizbar ist,
Aufheizen der beheizbaren Siegelleiste (63.2),
In-Kontakt-Bringen der Siegelleiste (63.1) der ersten Übergabeeinheit (61.1) mit der ersten Materialbahn (22.1) und der Siegelleiste (63.2) der zweiten Übergabeeinheit (61.2) mit der zweiten Materialbahn (22.2), um die erste und zweite Materialbahn (22.1, 22.2) miteinander zu verschweißen.

12. Verfahren (200) nach Anspruch 11, **dadurch gekennzeichnet, dass**
die erste Übergabeeinheit (61.1) und die zweite Übergabeeinheit (61.2) jeweils ferner eine erste Vakuumplatte (64.1, 64.2) und eine zweite Vakuumplatte (65.1, 65.2) aufweisen, zwischen denen die Siegelleiste (63.1, 63.2) angeordnet ist, wobei die erste Vakuumplatte (64.1, 64.2), die zweite Vakuumplatte (65.1, 65.2) und die Siegelleiste (63.1, 63.2) eine Andrückfläche bilden, wobei die erste Vakuumplatte (64.1, 64.2) und die zweite Vakuumplatte (65.1, 65.2) relativ zu der Siegelleiste (63.1, 63.2) bewegbar sind und die Siegelleiste (63.1, 63.2) relativ zu der ersten und zweiten Vakuumplatte (64.1, 65.1, 64.2, 65.2) bewegbar ist, und dass
zunächst die erste und zweite Vakuumplatte (64.1, 65.1, 64.2, 65.2) der ersten und zweiten Übergabeeinheit (61.1, 61.2) in Kontakt mit der ersten Materialbahn bzw. zweiten Materialbahn (22.1, 22.2) gebracht werden und danach die Siegelleisten (63.1, 63.2) in Kontakt mit der ersten und zweiten Materialbahn (22.1, 22.2) gebracht werden, um die erste und zweite Materialbahn (22.1, 22.2) miteinander zu verschweißen.

13. Verfahren (200) nach Anspruch 12, **dadurch gekennzeichnet, dass**
die zweite Vakuumplatte (65.1; 65.2) einen ersten Teil (67.1; 67.2) und einen zweiten Teil (68.1; 68.2) aufweist, wobei der erste Teil (67.1; 67.2) der zweiten Vakuumplatte (65.1; 65.2) und die erste Vakuumplatte (64.1; 64.2) zusammen einen ersten Vakuumbereich (70.1; 70.2) bilden und der zweite Teil (68.1; 68.2) der zweiten Vakuumplatte (65.1; 65.2) einen zweiten Vakuumbereich (69.1; 69.2) bildet, und dass
zum Ersetzen des ersten Coils (37.1) durch das zweite Coil (37.2):
zunächst ein Vakuum im ersten und zweiten Vakuumbereich (69.2, 70.2) der zweiten Übergabeeinheit (61.2) erzeugt wird, und die zweite Materialbahn (22.2) mittels der ersten und zweiten Vakuumplatte (64.2, 65.2) der zweiten Übergabeeinheit (61.2) angesogen und fixiert wird,
das Vakuum im zweiten Vakuumbereich (69.2) ausgeschaltet wird und das Vakuum im ersten Vakuumbereich (70.2) erhalten bleibt und ein loses Ende der zweiten Materialbahn (22.2) durchtrennt wird,
zunächst die beheizbare Siegelleiste (63.2) der zweiten Übergabeeinheit (61.2) auf die gewünschte Temperatur erhitzt wird, während die zweite Materialbahn (22.2) die Siegelleiste (63.2) nicht berührt, und danach
die Siegelleisten (63.1 63.2) in Kontakt mit der ersten und zweiten Materialbahn (22.1, 22.2) gebracht werden,
und dass, während die Siegelleisten (63.1, 63.2) noch in Kontakt mit der ersten und zweiten Materialbahn (22.1, 22.2) stehen, die erste Materialbahn (22.1) durchtrennt wird, oder die erste Materialbahn (22.1) durchtrennt wird, wenn die Siegelleisten (63.1, 63.2) nicht mehr in Kontakt mit der ersten und zweiten Materialbahn (22.1, 22.2) stehen.

14. Verfahren (200) nach Anspruch 13, **dadurch gekennzeichnet, dass**
die erste Übergabeeinheit (61.1) und die zweite Übergabeeinheit (61.2) jeweils eine Rückplatte (79.1, 79.2) aufweisen, wobei die erste Vakuumplatte (64.1, 64.2) und die zweite Vakuumplatte (65.1, 65.2) mittels zumindest einer Federlagerung (74.1, 74.2) mit der Rückplatte (79.1, 79.2) gekoppelt ist, und die Siegelleiste (63.1, 63.2) auf der Rückplatte (79.1, 79.2) angeordnet ist, die erste und zweite Vakuumplatte (64.1, 65.1, 64.2, 65.2) der Siegelleiste (63.1, 63.2) vorstehen, und ein Spalt (76.1, 76.2) zwischen der Siegelleiste (63.1, 63.2) und der Materialbahn (22.1, 22.2) gebildet ist, und dass
die erste und zweite Übergabeeinheit (61.1, 61.2) zueinander bewegt werden, so dass
zunächst die erste und die zweite Vakuumplatte (64.1, 65.1, 64.2, 65.2) der ersten Übergabeeinheit (61.1) und der zweiten Übergabeeinheit (61.2) in Kontakt mit der ersten bzw. zweiten Materialbahn (22.1, 22.2) gebracht werden,
die Federlagerungen (74.1, 74.2) komprimiert werden und
die Siegelleisten (63.1, 63.2) in Kontakt mit der ersten und zweiten Materialbahn (22.1, 22.2) gebracht werden.

15. Verwendung der Vorrichtung (100) nach einem der Ansprüche 1 bis 7 zur Großserienherstellung von Energiezellen.
